# EUROPEAN PATENT APPLICATION

(11) **EP 4 757 014 A1**
(43) Date of publication of application: **10.06.2026**
(21) Application number: 25752510.5
(22) Date of filing: 31.01.2025
(51) Int. Cl.: H01M 50/148, H01M 50/186, H01M 50/184, H01M 50/155, H01M 50/383, H01M 50/209, H01M 50/213

(54) **COVER-CELL ASSEMBLY, BATTERY CELL ASSEMBLY, AND BATTERY PACK**

(30) Priority: 07.02.2024 KR 20240019017
(71) Applicant: LG Energy Solution, Ltd., Seoul 07335 (KR)
(72) Inventor: KIM, Jin Hyuk, Daejeon 34122 (KR); CHOI, Jong Hwa, Daejeon 34122 (KR); LEE, Jae Hyun, Daejeon 34122 (KR)
(74) Representative: Plasseraud IP
(86) International application number: PCT/KR2025/099155
(87) International publication number: WO 2025/170402

(57) **Abstract**

According to exemplary embodiments, a cover-cell assembly is provided. The cover-cell assembly comprises: an electrode assembly that includes a positive electrode, a negative electrode, and a separator disposed therebetween; a case that includes an accommodation portion covering the electrode assembly and a sealing portion surrounding the accommodation portion; and a cell cover that is coupled to the case and includes a refractory material, wherein the cell cover fixes the sealing portion to the accommodation portion.

## Description

### Technical Field

The present disclosure relates to a cover-cell assembly, a battery cell assembly, and a battery pack. The present application claims the benefit of priority based on Korean Patent Application No. 10-2024-0019017, filed on February 7, 2024, and the entire contents of the Korean patent application is incorporated herein by reference.

### Background Art

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### Disclosure

### Technical Problem

The present disclosure is directed to providing a cover-cell assembly with improved safety, a battery cell assembly, and a battery pack.

### Technical Solution

Embodiments of the present disclosure provide a cover-cell assembly. The cover-cell assembly includes an electrode assembly including a positive electrode, a negative electrode, and a separator between the positive and negative electrodes, a case including a storage part covering the electrode assembly and a sealing part surrounding the storage part, and a cell cover coupled to the case and including a fire-resistant material, and the cell cover fixes the sealing part to the storage part.

The sealing part may be in contact with a side of the case between a first main surface and a second main surface of the case and the second main surface of the case.

The sealing part may be spaced apart from the first main surface of the case.

The sealing part may extend from the first main surface of the case to the second main surface of the case.

The cell cover may include a first part in contact with the first main surface, a second part in contact with the second main surface, and a third part connected to the first and second parts.

The third part may be spaced apart from the case.

The second part may be in contact with the sealing part.

The second part may include a stepped portion having a step shape or a slope shape.

The first part may partially cover the first main surface, and the second part may partially cover the second main surface.

Embodiments provide a battery cell assembly including a plurality of cover-cell assemblies.

Each of the plurality of cover assemblies includes an electrode assembly including a positive electrode, a negative electrode and a separator between the positive and negative electrodes, a case covering the electrode assembly, and a cell cover coupled to the case and including a fire-resistant material.

The case includes a storage part and a sealing part surrounding the storage part.

The cell cover fixes the sealing part to the storage part.

The cell cover may include a first part in contact with a first main surface of the case, a second part in contact with a second main surface of the case that is opposite to the first main surface, and a third part spaced apart from the case.

The second part of the cell cover may be in contact with the second main surface of the case and the sealing part of the case.

The second part of the cell cover may include a stepped portion having a step shape or a slope shape.

The battery cell assembly may further include a mono frame surrounding the plurality of cover-cell assemblies.

The battery cell assembly may further include an external frame coupled to the mono frame.

The battery cell assembly may further include a U-frame supporting the plurality of cover-cell assemblies, and a top plate coupled to the U-frame.

The battery cell assembly may further include an external frame coupled to the U-frame and the top plate.

### Advantageous Effects

According to embodiments of the present disclosure, a battery cell assembly may include a plurality of cover-cell assemblies including a cell cover. Accordingly, when a thermal runaway event occurs, thermal propagation can be delayed and venting can be promoted to improve the safety of the battery cell assembly.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### Brief Description of the Drawings

FIGS. 1 and 2 are diagrams illustrating a cover-cell assembly according to embodiments.
FIG. 3 is an exploded perspective view of a cover-cell assembly according to embodiments.
FIGS. 4 and 5 are diagrams illustrating a cover-cell assembly according to other embodiments.
FIG. 6 is an exploded perspective view of a cover-cell assembly according to embodiments.
FIG. 7 is a diagram illustrating a battery cell assembly according to embodiments.
FIG. 8 is a diagram illustrating a battery cell assembly according to embodiments.
FIG. 9 is a diagram illustrating a battery cell assembly according to embodiments.
FIG. 10 is a diagram illustrating a battery cell assembly according to embodiments.
FIG. 11 is a diagram illustrating a battery cell assembly according to embodiments.
FIG. 12 is a diagram illustrating a battery pack according to embodiments.

### Best Mode

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

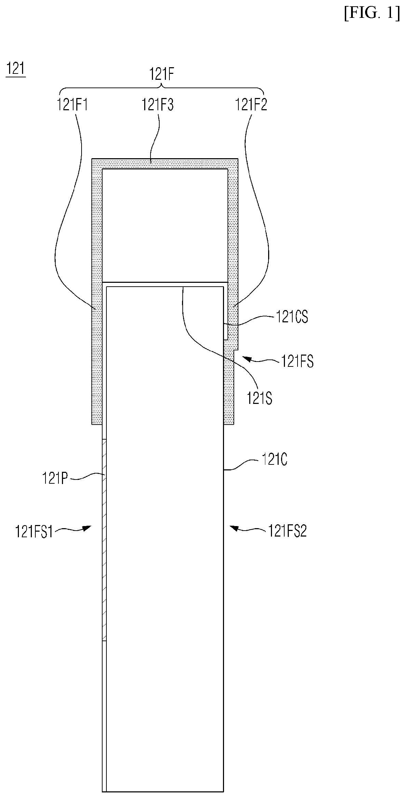

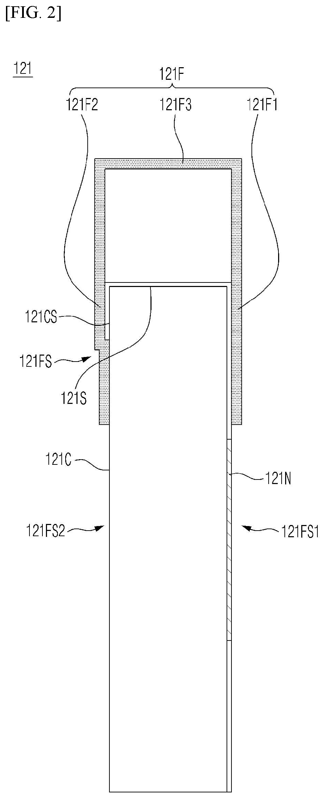

FIGS. 1 and 2 are diagrams illustrating a cover-cell assembly 121 according to embodiments. FIG. 2 illustrates the cover-cell assembly 121 viewed from a direction opposite to the direction of FIG. 1.

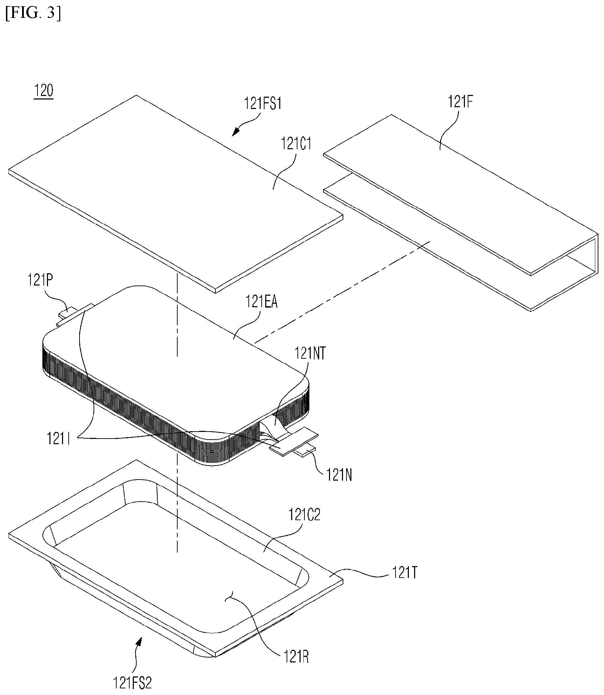

FIG. 3 is an exploded perspective view of the cover-cell assembly 121 according to embodiments.

Referring to FIGS. 1 to 3, the cover-cell assembly 121 may include a case 121C, an electrode assembly 121EA, a positive electrode terminal 121P, a negative electrode terminal 121N, and a cell cover 121F. The cover-cell assembly 121 may further include an electrolyte.

According to embodiments, the cover-cell assembly 121 may include a cylindrical battery cell, a prismatic battery cell, or a pouch type battery cell. An electrode assembly of the cylindrical battery cell is embedded in the cylindrical metal can. An electrode assembly of the prismatic battery cell is embedded in the prismatic metal can. An electrode assembly of the pouch type battery cell is embedded in a pouch case including an aluminum laminate sheet. Hereinafter, the technical idea of the present disclosure will be described with respect to an example in which the cover-cell assembly 121 includes a pouch type battery cell but those of ordinary skill in the art will be able to easily derive an example in which the cover-cell assembly 121 includes a cylindrical battery cell or an prismatic battery cell based on the description herein.

The electrode assembly 121EA may include a positive electrode, a negative electrode, and a separator between the positive electrode and the negative electrode. The electrode assembly 121EA may be of a jelly-roll type or stack type. The electrode assembly 121EA that is of the jelly-roll type may include a structure in which a positive electrode, a negative electrode, and a separator between the positive and negative electrodes are wound together. The electrode assembly 121EA that is of the stack type may include a plurality of positive electrodes and a plurality of negative electrodes that are sequentially stacked, and a plurality of separators therebetween.

Each of the plurality of positive electrodes of the electrode assembly 121EA may include a positive electrode tab (not shown). The positive electrode tab of each of the plurality of positive electrodes of the electrode assembly 121EA may be short-circuited with the positive electrode terminal 121P. The positive electrode tab of each of the plurality of positive electrodes of the electrode assembly 121EA may be welded to the positive electrode terminal 121P.

Each of the plurality of negative electrodes of the electrode assembly 121EA may include a negative electrode tab 121NT. The negative electrode tab 121NT of each of the plurality of negative electrodes of the electrode assembly 121EA may be short-circuited with the negative electrode terminal 121N. The negative electrode tab 121NT of each of the plurality of negative electrodes of the electrode assembly 121EA may be welded to the negative electrode terminal 121N.

The case 121C may include an inner resin layer, a metal layer, and an outer resin layer. An adhesive and an anti-corrosion layer may be further provided between the inner resin layer and the metal layer and between the outer resin layer and the metal layer.

The inner resin layer may have thermal adhesion and be referred to as a sealant layer. The inner resin layer allows sealing of the case 121C. The inner resin layer may include, for example, a polyolefin-based resin such as polypropylene (PP) and polyethylene (PE). The metal layer may include an alloy of iron, carbon, chromium and manganese, an alloy of iron, chromium and nickel, or aluminum. The metal layer may be a gas barrier. The metal layer may block the entry and exit of a gas to and from the case 121C. The outer resin layer may be a surface protective layer. The outer resin layer may include a material having wear resistance and heat resistance, such as a nylon resin.

The case 121C may be provided by bonding a first case 121C1 and a second case 121C2 together. The first case 121C1 may be substantially flat. The first case 121C1 may not include a storage part. The second case 121C2 may include a storage part 121R. The storage part 121R may be formed by a pouch forming process. The storage part 121R is a part of the second case 121C2 that is molded in the form of bowl to accommodate the electrode assembly 121EA therein.

A terrace 121T of the second case 121C2 may surround the storage part 121R. The terrace 121T of the second case 121C2 may be bonded to an edge of the first case 121C1 to provide the case 121C. A sealing part 121CS may be provided by bonding the first and second cases 121C1 and 121C2 together. That is, the sealing part 121CS may be a bonding part of the first and second cases 121C1 and 121C2.

As shown in FIG. 3, when a storage part is formed in only the second case 121C2 among the first and second cases 121C1 and 121C2, the sealing part 121CS may be connected to a first main surface 121FS1. The sealing part 121CS may include a portion that is coplanar with the first main surface 121FS1. The sealing part 121CS may extend from the first main surface 121FS1 to a second main surface 121FS2.

The case 121C may have a roughly rectangular parallelepiped shape, and the first main surface 121FS1 and the second main surface 121FS2 of the case 121C may be widest surfaces of the case 121C. The first main surface 121FS1 and the second main surface 121FS2 may be substantially parallel to the electrode assembly 121EA or at least one of the plurality of positive electrodes and the plurality of negative electrodes of the electrode assembly 121EA. The first main surface 121FS1 and the second main surface 121FS2 may be opposite to each other.

An insulating tape 121I may be applied onto the positive electrode terminal 121P and the negative electrode terminal 121N. The positive electrode terminal 121P and the negative electrode terminal 121N may protrude to the outside of the case 121C. Accordingly, a resulting voltage and current of the cover-cell assembly 121 may be output through the positive electrode terminal 121P and the negative electrode terminal 121N. The positive electrode terminal 121P may be a positive electrode lead. The negative electrode terminal 121N may be a negative electrode lead.

According to embodiments, the cell cover 121F may include a fire-resistant material. The cell cover 121F may include a non-combustible glass (NCG) fiber sheet or a glass-fiber-containing modified polyphenylene oxide (mPPO).

The cell cover 121F may include a first part 121F1 in contact with the first main surface 121FS1, a second part 121F2 in contact with the second main surface 121FS2, and a third part 121F3 connected to the first and second parts 121F1 and 121F2. The third part 121F3 may be spaced apart from the case 121C. The first part 121F1 of the cell cover 121F may partially cover the first main surface 121FS1. The second part 121F2 of the cell cover 121F may partially cover the second main surface 121FS2.

The cell cover 121F may include bent portions. The cell cover 121F may include, for example, two bent portions and thus may have a substantially n-shape but is not limited thereto. The cell cover 121F may have a shape deformed from the n-shape due to the progress of a process and the use after shipment.

The first part 121F1 of the cell cover 121F may be fixed to the first main surface 121FS1. The second part 121F2 of the cell cover 121F may be fixed to the second main surface 121FS2. The cell cover 121F may include a fire-resistant layer and an adhesive layer, and the first and second parts 121F1 and 121F2 of the cell cover 121F may be fixed to the first and second main surfaces 121FS1 and 121FS2 of the case 121C via the adhesive layer.

The second part 121F2 of the cell cover 121F may be in contact with the sealing part 121CS of the case 121C. The second part 121F2 of the cell cover 121F may allow the sealing part 121CS of the case 121C to be fixed to the second main surface 121FS2. More specifically, the sealing part 121CS may be substantially coplanar with the first main surface 121FS1. By combining the cell cover 121F and the case 121C, a portion of the sealing part 121CS may be folded to be in contact with the second main surface 121FS2 and a side 121S. The side 121S of the case 121C may be interposed between the first and second main surfaces 121FS1 and 121FS2.

The second part 121F2 of the cell cover 121F fixes the sealing part 121CS to the second main surface 121FS2 and thus may include a stepped portion 121FS. The stepped portion 121FS may have a step shape or a slope shape. The stepped portion 121FS may be on the second main surface 121FS2.

### (Second embodiment)

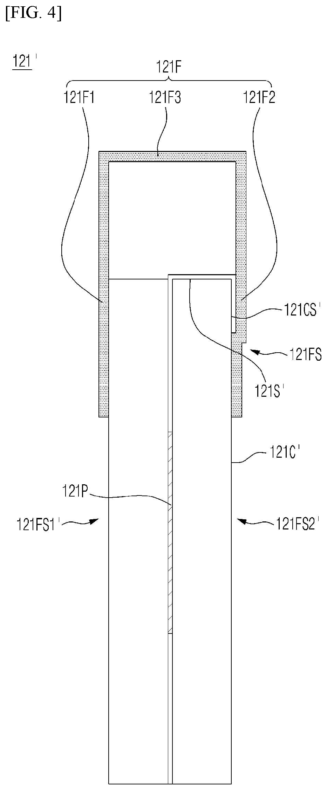

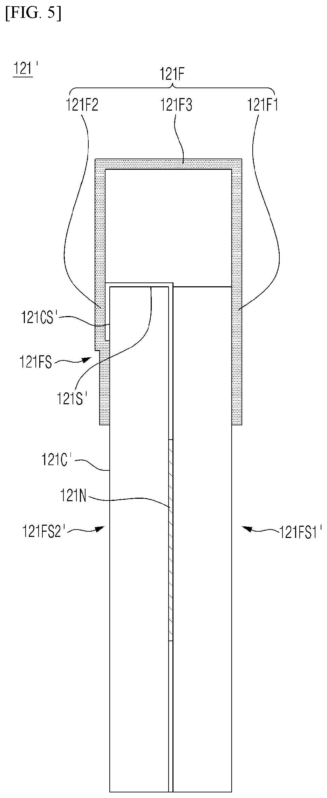

FIGS. 4 and 5 are diagrams illustrating a cover-cell assembly 121' according to other embodiments.

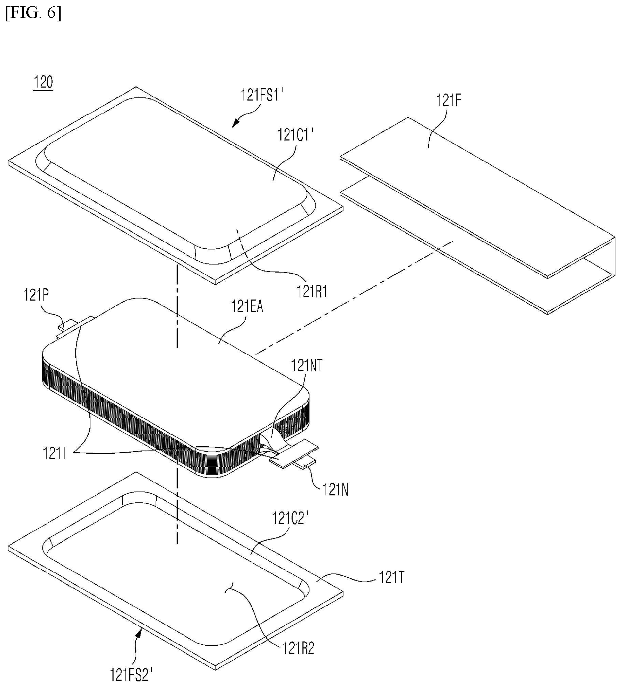

FIG. 6 is an exploded perspective view of the cover-cell assembly 121 according to embodiments.

Referring to FIGS. 4 and 5, the cover-cell assembly 121' may include a case 121C', an electrode assembly 121EA, a positive electrode terminal 121P, a negative electrode terminal 121N, and a cell cover 121F. The cover-cell assembly 121' may further include an electrolyte.

The electrode assembly 121EA, the positive electrode terminal 121P, the negative electrode terminal 121N, and the cell cover 121F are substantially the same as those described above with reference to FIGS. 1 to 3 and thus redundant description thereof is omitted here.

The case 121C' may be provided by bonding a first case 121C1' and a second case 121C2' together. Unlike the first case 121C1 (see FIG. 1), the first case 121C1' may include a storage part 121R1. That is, the first case 121C1' may include the storage part 121R1, and the second case 121C2' may include a storage part 121R2. The electrode assembly 121EA may be accommodated in the storage parts 121R1 and 121R2.

Accordingly, a sealing part 121CS' of the case 121C' may be between first and second main surfaces 121FS1' and 121FS2'. By combining the cell cover 121F and the case 121C', a portion of the sealing part 121CS' of the case 121C' may be folded to be in contact with the second main surface 121FS2' and a side 121S'. The side 121S' of the case 121C' may be interposed between the first and second main surfaces 121FS1' and 121FS2'.

### (Third Embodiment)

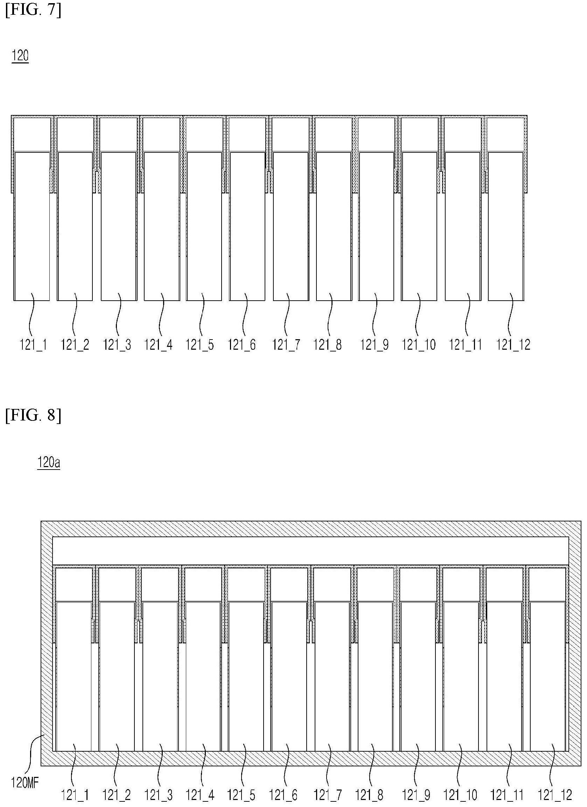

FIG. 7 is a diagram for describing a battery cell assembly 120 according to embodiments.

Referring to FIGS. 1, 2 and 7, the battery cell assembly 120 may include a plurality of cover-cell assemblies 121_1, 121_2, 121_3, 121_4, 121_5, 121_6, 121_7, 121_8, 121_9, 121_10, 121_11 and 121_12 (hereinafter, referred to as 121_1 to 121_12). Each of the plurality of cover-cell assemblies 121_1 to 121_12 is substantially the same as the cover-cell assembly 121 described above with reference to FIGS. 1 to 3. The cover-cell assembly 121' of FIGS. 4 to 6 may replace the cover-cell assembly 121 of FIGS. 1 to 3.

The plurality of cover-cell assemblies 121_1 to 121_12 may be arranged in one direction. The plurality of cover-cell assemblies 121_1 to 121_12 may be coupled to one another via, for example, an adhesive.

The plurality of cover-cell assemblies 121_1 to 121_12 may form a plurality of banks. For example, the cover-cell assemblies 121_1 and 121_2 may be connected to each other in parallel and may form a first bank. The cover-cell assemblies 121_3 and 121_4 may be connected to each other in parallel and may form a second bank. The cover-cell assemblies 121_5 and 121_6 may be connected to each other in parallel and may form a third bank. The cover-cell assemblies 121_7 and 121_8 may be connected to each other in parallel and may form a fourth bank. The cover-cell assemblies 121_9 and 121_10 may be connected to each other in parallel and may form a fifth bank. The cover-cell assemblies 121_11 and 121_12 may be connected to each other in parallel and may form a sixth bank. The plurality of banks may be connected to each other in series.

A resulting connection form of the plurality of cover-cell assemblies 121_1 to 121_12 may be referred to as a 2-parallel-6 serial (2P-6S) form but is only an example and should not be understood as limiting the technical idea of the present disclosure in any sense. The number of banks to be connected in series and the number of the cover-cell assemblies 121_1 to 121_12 to be included in the plurality of banks may be determined by a voltage and a current to be output from the battery cell assembly 120.

The battery cell assembly 120 may further include pads, a first integrated circuit assembly, a second integrated circuit assembly, and a flexible flat cable (FFC) assembly.

The pads may absorb swelling of the plurality of cover-cell assemblies 121_1 to 121_12. Each of the pads may include polyurethane (PU). Each of the pads may include a fire-resistant material such as a silicone.

The first integrated circuit assembly may include an insulating frame, an integrated circuit, bus bars, sensing plates, sensing bars, temperature sensors, wires, and an insulating cover. The second integrated circuit assembly may include an insulating frame, an integrated circuit, sensing plates, temperature sensors, wires, and an insulating cover.

The first and second integrated circuit assemblies may include physical and functional elements for providing an electrical connection between the plurality of cover-cell assemblies 121_1 to 121_2, outputting resulting voltages of the plurality of cover-cell assemblies 121_1 to 121_2, and measuring voltages (or currents) of nodes inside a circuit consisting of the plurality of cover-cell assemblies 121_1 to 121_12.

The insulating frame may include an insulating material such as plastic. The insulating frame may cover front sides of the plurality of cover-cell assemblies 121_1 to 121_12. The insulating frame may support the integrated circuit, the bus bars, the sensing plates, the sensing bars, the temperature sensors, and the wires.

The bus bars may be short-circuited to the positive electrode leads 121P of the cover-cell assemblies 121_1 and 121_2 of the first bank and the negative electrode leads 121N of one or more cover-cell assemblies 121_11 and 121_12 of a last bank. The bus bars may be welded to the positive electrode leads 121P of the cover-cell assemblies 121_1 and 121_2 of the first bank and the negative electrode leads 121N of one or more cover-cell assemblies 121_11 and 121_12 of the last bank. Resulting voltages of the plurality of cover-cell assemblies 121_1 to 121_12 of the battery cell assembly 120 may be output through the bus bars. The bus bars may be fixed to the insulating frame.

The integrated circuit may be mounted on the insulating frame. The positive electrode leads 121P and the negative electrode leads 121N that are welded together may form nodes inside the battery cell assembly 120. The integrated circuit may be configured to measure voltages of the nodes through the sensing plates and the sensing bars.

The sensing bars may include a conductive material. The sensing bars may have a rod shape. The sensing bars may be short-circuited to the bus bars. The sensing bars may be coupled to the bus bars. Voltages of the bus bars may be measured through the sensing bars.

Each of the sensing plates may have a patch shape or a pad shape. The sensing plates may include a conductive material. The sensing plates may be short-circuited to corresponding ones of the positive electrode leads 121P and the negative electrode leads 121N of the plurality of cover-cell assemblies 121_1 to 121_12.

Each of the sensing plates may be connected to the integrated circuit. Voltages of the nodes inside the battery cell assembly 120 may be measured through the sensing plates.

The temperature sensors may be configured to measure temperatures at a plurality of points on the battery cell assembly 120. The temperature sensors may be spatially arranged and thus a temperature distribution in the battery cell assembly 120 may be measured.

The insulating cover may include an insulating material such as plastic. The insulating cover may be interference-fitted into the insulating frame. The insulating cover may cover the integrated circuit, the bus bars, the sensing plates, the sensing bars, and the temperature sensors and thus electrical elements of the first and second integrated circuit assemblies may be protected.

### (Fourth Embodiment)

FIG. 8 is a diagram for describing a battery cell assembly 120a according to embodiments.

Referring to FIG. 8, the battery cell assembly 120a may include a plurality of cover-cell assemblies 121_1 to 121_12 and a mono frame 120MF. The plurality of cover-cell assemblies 121_1 to 121_12 are substantially the same as those described above with reference to FIG. 7.

The plurality of cover-cell assemblies 121_1 to 121_12 may be covered by the mono frame 120MF. The mono frame 120MF may be an integral frame. The mono frame 120MF may include an opening into which the plurality of cover-cell assemblies 121_1 to 121_12 are inserted and thus a cross section of the mono frame 120MF may have a hollow quadrangular shape. The mono frame 120MF may include a metal such as aluminum or stainless steel and protect the plurality of cover-cell assemblies 121_1 to 121_12.

### (Fifth Embodiment)

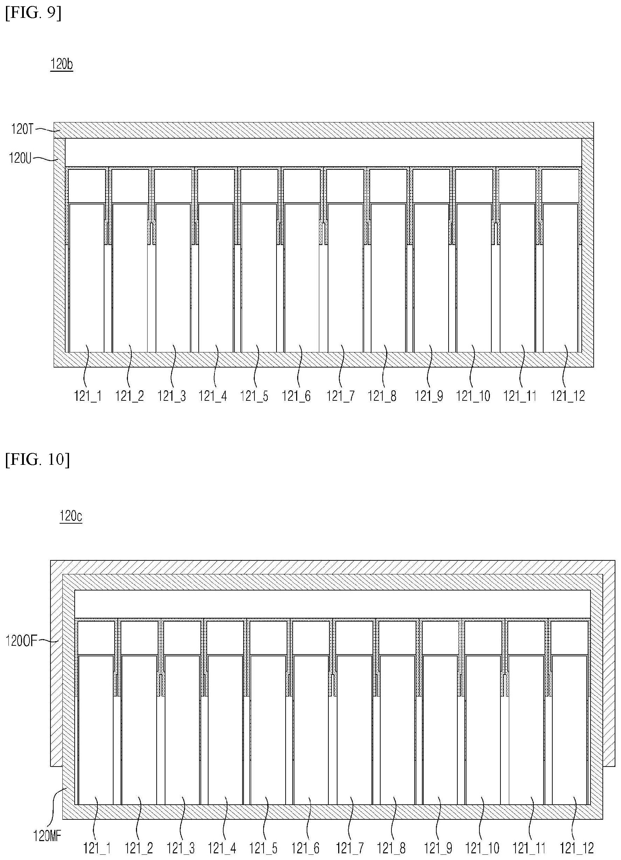

FIG. 9 is a diagram for describing a battery cell assembly 120b according to embodiments.

Referring to FIG. 9, the battery cell assembly 120b may include a plurality of cover-cell assemblies 121_1 to 121_12, a U-frame 120U, and a top plate 120T. The plurality of cover-cell assemblies 121_1 to 121_12 are substantially the same as those described above with reference to FIG. 7.

The plurality of cover-cell assemblies 121_1 to 121_12 may be covered with the U-frame 120U and the top plate 120T. A cross section of the U-frame 120U may have a U-shape. Accordingly, the U-frame 120U may have a relatively wide opening, and the plurality of cover-cell assemblies 121_1 to 121_12 may be easily inserted into the U-frame 120U. The U-frame 120U and the top plate 120T may be coupled to each other by butt welding or the like. The U-frame 120U and the top plate 120T may include a metal such as aluminum or stainless steel and protect the plurality of cover-cell assemblies 121_1 to 121_12.

### (Sixth Embodiment)

FIG. 10 is a diagram for describing a battery cell assembly 120c according to embodiments.

Referring to FIG. 10, the battery cell assembly 120c may include a plurality of cover-cell assemblies 121_1 to 121_12, a mono frame 120MF, and an external frame 120OF. The battery cell assembly 120c is the same as the battery cell assembly 120a of FIG. 8 except that the battery cell assembly 120c further includes the external frame 120OF.

The external frame 120OF may have a U-shape. The external frame 120OF may be coupled to the mono frame 120MF. The external frame 120OF may be welded to the mono frame 120MF or be fixed to the mono frame 120MF by a mechanical means such as bolting. The external frame 120OF may provide additional mechanical robustness to the battery cell assembly 120c.

### (Seventh Embodiment)

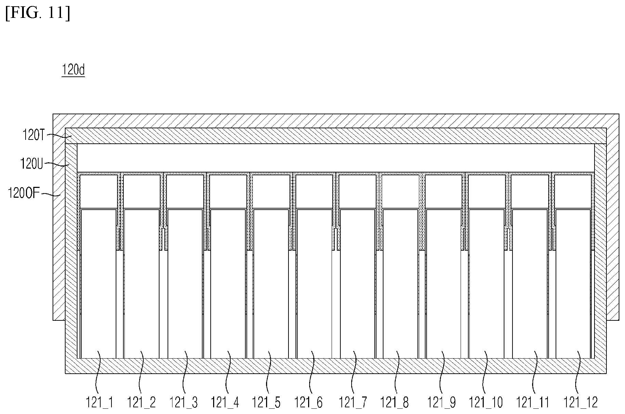

FIG. 11 is a diagram for describing a battery cell assembly 120d according to embodiments.

Referring to FIG. 11, the battery cell assembly 120d may include a plurality of cover-cell assemblies 121_1 to 121_12, a U-frame 120U, a top plate 120T, and an external frame 120OF. The battery cell assembly 120d is the same as the battery cell assembly 120b of FIG. 9 except that the battery cell assembly 120d further includes the external frame 120OF.

The external frame 120OF may be coupled to the U-frame 120U and the top plate 120T. The external frame 120OF may be welded to the U-frame 120U and the top plate 120T or be fixed to the U-frame 120U and the top plate 120T by a mechanical means such as bolting. The external frame 120OF may provide additional mechanical robustness to the battery cell assembly 120d.

### (Eighth Embodiment)

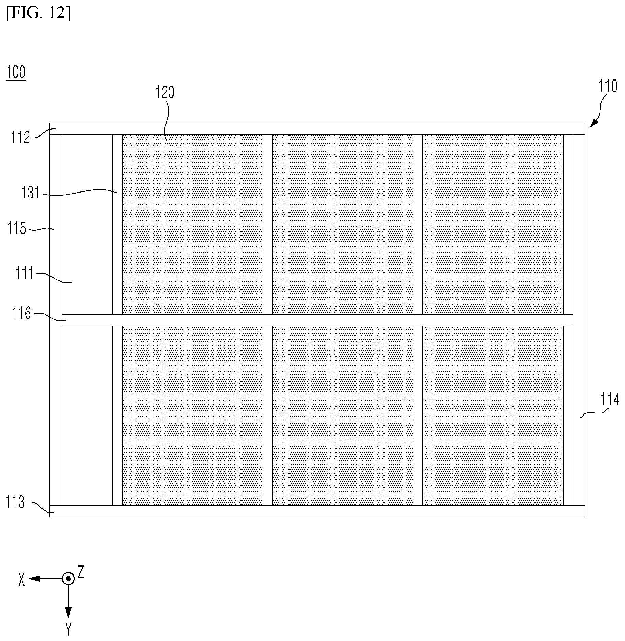

FIG. 12 is a plan view of a battery pack 100 according to embodiments.

Referring to FIGS. 1, 7 and 12, the battery pack 100 may include a pack housing 110, a plurality of battery cell assemblies 120, and cross-beams 131. The battery pack 100 may be a final product to be mounted in an application such as a vehicle.

The pack housing 110 may provide a space for mounting the battery cell assemblies 120 therein. The pack housing 110 may include a base plate 111, side walls 112, 113, 114, and 115, and a center beam 116.

Here, two directions substantially parallel to a mounting surface (i.e., a surface facing the battery cell assembly 120) of the base plate 111 are defined as an X-axis direction and a Y-axis direction, and a direction substantially perpendicular to the mounting surface of the base plate 111 is defined as a Z-axis direction. The X-axis direction, the Y-axis direction, and the Z-axis direction may be substantially perpendicular to one another.

Each of the base plate 111 and the side walls 112 and 113 may be provided by an extrusion process. An extrusion direction of each of the base plate 111 and the side walls 112 and 113 may be the X-axis direction. The side walls 114 and 115 may also be provided by the extrusion process. The side walls 112, 113, 114, and 115 may be substantially perpendicular to the base plate 111.

According to embodiments, the base plate 111 and the side walls 112 and 113 may be coupled by friction stir welding. The base plate 111 may include a plurality of unit plates coupled to each other by friction stir welding.

The center beam 116 may extend in the X-axis direction. The center beam 116 may be interposed between the side walls 112 and 113. The center beam 116 may be included in a center plate that is one of the plurality of unit plates coupled to each other by friction stir welding. Accordingly, the center beam 116 may be formed together with the center plate and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120 may be on the base plate 111 of the pack housing 110. The base plate 111 may support the plurality of battery cell assemblies 120. The side walls 112, 113, 114, and 115 may horizontally surround the plurality of battery cell assemblies 120. The side walls 112, 113, 114, and 115 may protect the plurality of battery cell assemblies 120.

Although FIG. 12 illustrates that the battery pack 100 is of a moduleless type and the battery cell assemblies 120 of FIG. 7 are on the pack housing 110, one of the battery cell assemblies 120a, 120b, 120c, and 120d of FIGS. 8 to 11 may be provided instead of the battery cell assemblies 120.

In FIG. 1, the plurality of battery cell assemblies 120 may be arranged in a 3x2 array. The arrangement of the plurality of battery cell assemblies 120 of FIG. 1 is a nonlimiting example and should not be understood as limiting the technical idea of the present disclosure in any sense. Those of ordinary skill in the art will be able to easily derive the plurality of battery cell assemblies 120 arranged in an MxN array (here, M and N are each an integer of 2 or more), based on the above description.

The battery pack 100 may further include a lid coupled to the side walls 112, 113, 114, and 115 of the pack housing 110. The lid may cover elements, such as the battery cell assemblies 120 and electronic components, inside the battery pack 100. The lid may be fixed to the pack housing 110 by a mechanical coupling means such as bolting.

The battery pack 100 may further include exhaust devices coupled to the side walls 114 and 115. One of the side walls 114 and 115 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120.

Here, the thermal runaway event of the plurality of battery cell assemblies 120 is a state in which a change of temperature of the plurality of battery cell assemblies 120 accelerates the change of temperature, and is uncontrollable positive feedback. A temperature of the plurality of battery cell assemblies 120 that are in a thermal runaway state sharply increases, and a large amount of a high-pressure gas and combustion debris are discharged therefrom.

According to embodiments, with respect to each of the plurality of cover-cell assemblies 121 of each of the plurality of battery cell assemblies 120, a cell cover 121F may be spaced apart from the base plate 111 with a case 121C therebetween. According to embodiments, the cell cover 121F may be at a higher level than the case 121C with respect to the base plate 111. That is, the cell cover 121F may cover an upper part of the case 121C. Accordingly, in the thermal runaway event, even when a high-temperature gas and flame are discharged through an exhaust path between the lid and the plurality of battery cell assemblies 120, the cover-cell assembly 121 may be protected by the cell cover 121F and the safety of the battery pack 100 may improve.

The battery pack 100 may further include a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs. The additional electronic components may be interposed between the plurality of battery cell assemblies 120 and the side wall 115. A space between the battery cell assemblies 120 and the side wall 115 may be referred to as an electronic component mounting area.

The battery pack 100 may further include a plurality of inter-bus bars configured to electrically connect the plurality of battery cell assemblies 120. The plurality of battery cell assemblies 120 may be connected in series via the plurality of inter-bus bars. Accordingly, the battery pack 100 may be configured to output a high voltage to an external load (e.g., a motor of a vehicle).

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A cover-cell assembly comprising:
an electrode assembly including a positive electrode, a negative electrode, and a separator between the positive and negative electrodes;
a case including a storage part covering the electrode assembly and a sealing part surrounding the storage part; and
a cell cover coupled to the case and including a fire-resistant material,
wherein the cell cover fixes the sealing part to the storage part.

2. The cover-cell assembly of claim 1, wherein the sealing part is in contact with a side of the case between a first main surface and a second main surface of the case and the second main surface of the case.

3. The cover-cell assembly of claim 2, wherein the sealing part is spaced apart from the first main surface of the case.

4. The cover-cell assembly of claim 2, wherein the sealing part extends from the first main surface of the case to the second main surface of the case.

5. The cover-cell assembly of claim 2, wherein the cell cover includes a first part in contact with the first main surface, a second part in contact with the second main surface, and a third part connected to the first and second parts.

6. The cover-cell assembly of claim 5, wherein the third part is spaced apart from the case.

7. The cover-cell assembly of claim 5, wherein the second part is in contact with the sealing part.

8. The cover-cell assembly of claim 5, wherein the second part includes a stepped portion having a step shape or a slope shape.

9. The cover-cell assembly of claim 5, wherein the first part partially covers the first main surface, and
the second part partially covers the second main surface.

10. A battery cell assembly, comprising a plurality of cover-cell assemblies,
wherein each of the plurality of cover-cell assemblies includes an electrode assembly including a positive electrode, a negative electrode and a separator between the positive and negative electrodes, a case covering the electrode assembly, and a cell cover coupled to the case and including a fire-resistant material,
the case includes a storage part and a sealing part surrounding the storage part, and
the cell cover fixes the sealing part to the storage part.

11. The battery cell assembly of claim 10, wherein the cell cover includes a first part in contact with a first main surface of the case, a second part in contact with a second main surface of the case that is opposite to the first main surface, and a third part spaced apart from the case.

12. The battery cell assembly of claim 11, wherein the second part of the cell cover is in contact with the second main surface of the case and the sealing part of the case.

13. The battery cell assembly of claim 12, wherein the second part of the cell cover includes a stepped portion having a step shape or a slope shape.

14. The battery cell assembly of claim 10, further comprising a mono frame surrounding the plurality of cover-cell assemblies.

15. The battery cell assembly of claim 14, further comprising an external frame coupled to the mono frame.

16. The battery cell assembly of claim 10, further comprising:
a U-frame supporting the plurality of cover-cell assemblies; and
a top plate coupled to the U-frame.

17. The battery cell assembly of claim 16, further comprising an external frame coupled to the U-frame and the top plate
